# EUROPÄISCHE PATENTSCHRIFT

(11) **EP 4 596 082 B1**
(45) Veröffentlichungstag und Bekanntmachung des Hinweises auf die Patenterteilung: **11.03.2026**
(21) Anmeldenummer: 25154315.3
(22) Anmeldetag: 28.01.2025
(51) Int. Cl.: B01D 46/00, F23J 15/02

(54) **FILTERANORDNUNG FÜR EINE LUFTZUFÜHREINRICHTUNG NEBST VERFAHREN ZU DEREN HERSTELLUNG SOWIE LUFTZUFÜHREINRICHTUNG**
FILTER ARRANGEMENT FOR AN AIR SUPPLY DEVICE AND METHOD FOR THE PRODUCTION THEREOF, AND AIR SUPPLY DEVICE
ENSEMBLE FILTRE POUR UN DISPOSITIF D'ALIMENTATION EN AIR ET SON PROCÉDÉ DE FABRICATION, DISPOSITIF D'ALIMENTATION EN AIR

(30) Priorität: 01.02.2024 DE 102024102897
(43) Veröffentlichungstag der Anmeldung: 06.08.2025
(73) Patentinhaber: Witzenmann GmbH, 75175 Pforzheim (DE)
(72) Erfinder: Heel, Julius, 75173 Pforzheim (DE); Breisinger, Michael, 76307 Karlsbad (DE)
(74) Vertreter: LBP Lemcke, Brommer & Partner Patentanwälte mbB

(56) Entgegenhaltungen:
- EP-A1- 2 404 567
- EP-B1- 2 179 746
- US-A- 4 783 321
- US-B2- 7 381 385

## Beschreibung

Die Erfindung betrifft eine Filteranordnung für eine Luftzuführeinrichtung, insbesondere für Wohnräume, die mit einem (Kamin-) Ofen ausgestattet sind, gemäß Anspruch 1.

Die Erfindung betrifft auch gemäß Anspruch 9 eine Luftzuführeinrichtung, insbesondere für Wohnräume, mit einer erfindungsgemäßen Filteranordnung.

Weiterhin betrifft die Erfindung mit dem Anspruch 15 ein Verfahren zur Herstellung einer Filteranordnung, insbesondere der erfindungsgemäßen Filteranordnung.

Offenbart wird schließlich auch noch ein Verfahren zur Wartung der erfindungsgemäßen Luftzuführeinrichtung.

Bei der Belüftung von Wohnräumen, insbesondere solchen mit Kaminofen, kommen nach dem Stand der Technik regelmäßig Luftzuführeinrichtungen zum Einsatz, bei denen die angesaugte Umgebungsluft durch den Einsatz von Filtermaterialien, wie Filterwatte, Filterkörbe oder dgl., zumindest grob gereinigt wird. Diese Filtermaterialien sind in entsprechenden Filteranordnungen enthalten, die nach dem Stand der Technik unterschiedlich ausgebildet sein können.

Bei einer ersten vorbekannten Filteranordnung ist ein Taschenfilter mit seinem Öffnungsrand zwischen zwei profilierten Metallringen eingespannt. Eine Klemmung des Filters erfolgt durch den inneren Ring, an dem gebogene Drähte für die Montage bzw. Demontage angeschweißt wurden. Unterhalb des äußeren Rings ist eine Dichtung angebracht. Das Gesamtkonstrukt wird auf das umgebördelte Ende eines Ansaugturms, der einen endständigen Teil der Luftzuführeinrichtung darstellt, aufgelegt.

Neben diesem vorbekannten Konzept existieren auf dem Markt zahlreiche weitere Lösungen, die zum Befestigen des Filtermaterials, u.a. Spannringe oder Filterkörbe. Der Spannring drückt das Filtermaterial an die Außenwand eines Rohrs, während beim Filterkorb das Filtermaterial auf den Korb aufgezogen und unter der Dichtung innerhalb einer Sicke an dem Filterkorb befestigt wird.

Die Verwendung von Spannringen nach dem Stand der Technik ist zwar kostengünstig umsetzbar, bietet jedoch in nachteiliger Weise keine Abdichtung und gewährleistet zudem nicht die sichere und dauerhaft exakte Positionierung in der Luftzuführeinrichtung, z.B. in einem betreffenden Lüftungsrohr.

Der Filterkorb bedingt eine aufwändige und entsprechend teure Herstellung der Korbgeometrie. Die erwähnte Dichtung muss bei einem (regelmäßig erforderlichen) Austausch des Filters ebenfalls demontiert werden, was die Handhabung erschwert und weitere Kosten verursacht.

Die erwähnten doppelten Klemmringe gehen einher mit einer aufwändigen und dementsprechend teuren Herstellung, weil zwei Formteile benötigt werden. Die Handhabung ist erschwert durch das zweitaufwändige "Einfädeln" des Filtermaterials durch einen Montagearbeiter und ein zusätzlich erforderliches Anbringen von Kunststoff-überzügen auf den Drähten. EP 179 746 B1, US 4 783 321 A, EP 2 404 567 A1 und US 7 381 385 B2 sind relevante Dokumente aus dem Stand der Technik.

Der Erfindung liegt die Aufgabe zugrunde, eine vereinfachte, kostengünstigere, dauerhafte und dennoch qualitativ hochwertige technische Lösung zu schaffen, insbesondere hinsichtlich der erreichbaren Dichtheit, mit der sich eine Filteranordnung der vorstehend skizzierten Art bereitstellen lässt. Ferner sollen eine Luftzuführeinrichtung, insbesondere für Wohnräume, ein Verfahren zur Herstellung einer Filteranordnung und ein Verfahren zur Wartung der Luftzuführeinrichtung angegeben werden, welche sich durch dieselben Vorteile auszeichnen.

Insbesondere soll die Wartung erleichtert und - sofern die Luftzuführeinrichtung über eine Luftansaughaube mit einem demontierbaren Deckel verfügt - zudem ein Austausch der Filteranordnung bzw. des Filtermaterials ohne Abnahme der gesamten Haube ermöglicht werden.

Die Aufgabe wird gelöst durch eine Filteranordnung mit den Merkmalen des Anspruchs 1, durch eine Luftzuführeinrichtung mit den Merkmalen des Anspruchs 9, durch ein Verfahren zur Herstellung einer Filteranordnung mit den Merkmalen des Anspruchs 15 und durch das außerdem noch offenbarte Verfahren zur Wartung der Luftzuführeinrichtung.

Vorteilhafte Weiterbildungen der Erfindung sind in den jeweiligen Unteransprüchen definiert.

Eine erfindungsgemäße Filteranordnung für eine Luftzuführeinrichtung, weist auf: einen Klemmring aus einem Blechmaterial, z.B. aus (Edel-) Stahl; einen Dichtungsring; und ein Filterteil aus einem Filtermaterial. Der Klemmring weist einen Grundkörper und über dessen äußeren Umfang verteilt eine Mehrzahl von ersten radialen Vorsprüngen auf, die von dem Grundkörper abragen und radial nach innen zurückgebogen (d.h. umgeformt) sind, so dass sie sich parallel zu einer Ebene des Grundkörpers erstrecken und jeweils in einem endlichen Abstand zu dem Grundkörper angeordnet sind. Der Dichtungsring ist konzentrisch an dem Grundkörper befestigt ist. Bevorzugt weisen der Dichtungsring und der Grundkörper im Wesentlichen gleiche (freie) Öffnungsquerschnitte auf. Das Filterteil weist eine Taschen- oder Beutelform mit einer Öffnung auf und ist mit einem Randbereich der Öffnung zwischen dem Grundkörper und den zurückgebogenen ersten radialen Vorsprüngen klemmend gehalten, woraus sich auch die verwendete Bezeichnung "Klemmring" ableitet.

Die Filteranordnung gemäß der vorliegenden Erfindung setzt sich also zusammen aus lediglich drei Teilen, nämlich dem Dichtungsring, dem Klemmring und dem Filterteil (Taschenfilter).

Der Dichtungsring kann bevorzugt aus einem PUR-Schaumstoff bestehen, welcher über eine selbstklebende Fläche verfügt und so einfach und exakt auf dem Klemmring aufgebracht werden kann.

Der Dichtungsring sorgt zum einen dafür, dass die angesaugte Außenluft auch tatsächlich durch das Filtermaterial geleitet wird und nicht daran vorbeiströmt. Zum anderen kann bei einem vorzugsweise (leicht) erhöhten Durchmesser des elastisch verformbaren Dichtungsrings (im Vergleich zu einem Innendurchmesser eines die Filteranordnung aufnehmenden Rohres oder Luftführungselements) zusätzlich für eine Verspannung und exakte Positionierung gesorgt werden.

Eine erfindungsgemäße Luftzuführeinrichtung, insbesondere für Wohnräume, besitzt eine erfindungsgemäße Filteranordnung, wie vorstehend skizziert, und wenigstens ein rohrförmiges Luftführungselement, wobei die Filteranordnung herausnehmbar in die Luftzuführeinrichtung eingesetzt ist.

Bei entsprechender Weiterbildung kann die Luftzuführeinrichtung eine endständige Ansaughaube aufweisen, die mit dem Luftführungselement fluidleitend verbunden ist.

Die Ansaughaube oder das Luftführungselement selbst kann so konstruiert sein, dass sie/es die Filteranordnung durch eine ausgeprägte Sicke oder wenigstens einen anderen Vorsprung auffängt.

Der Klemmring kann bevorzugt so konstruiert sein, dass er durch Umbiegen von - ohne Beschränkung - vier Laschen (entsprechend den genannten ersten radialen Vorsprüngen) den Taschenfilter bzw. das Filterteil fixiert. Zusätzliche Haken bzw. Haltevorsprünge oder -Spitzen können dafür sorgen, dass das Filterteil nach dem Umbiegen der Laschen nicht mehr verrutschen kann.

Außerdem können innen an dem Klemmring noch - ohne Beschränkung - zwei Laschen oder Griffteile angebracht bzw. angeformt sein, die umgebogen und gegriffen werden können und damit einen reibungslosen Austausch des Filters durch einen Facharbeiter ermöglichen.

Der Klemmring wird bevorzugt aus einem Stück gefertigt und erfordert keine weiteren Bearbeitungsschritte.

Der Taschenfilter oder Beutelfilter stellt ein an sich bekanntes Standard-Filterteil dar.

Ein erfindungsgemäßes Verfahren zur Herstellung einer Filteranordnung, insbesondere der erfindungsgemäßen Filteranordnung, beinhaltet die Schritte:
a) Bereitstellen eines Klemmrings aus einem Blechmaterial, der einen Grundkörper und über dessen äußeren Umfang verteilt eine Mehrzahl von ersten radialen Vorsprüngen aufweist, die von dem Grundkörper abragen;
b) Bereitstellen eines Dichtungsrings; und
c) Bereitstellen eines taschen- oder beutelförmigen Filterteils aus einem Filtermaterial mit einer Öffnung;
d) Anordnen des Filterteils an dem Klemmring, so dass ein Rand der Öffnung flächig vollumfänglich an dem Grundkörper anliegt;
e) Zurückbiegen der ersten radialen Vorsprünge radial nach innen auf diejenige Seite der Klemmrings, an der das Filterteil anliegt, so dass sie sich parallel zu einer Ebene des Grundkörpers erstrecken und jeweils einen Abschnitt des Randes der Öffnung des Filterteils klemmend gegen den Grundkörper halten;
f) konzentrisches Anbringen des Dichtungsrings an dem Grundkörper.

Ein Verfahren zur Wartung der erfindungsgemäßen Luftzuführeinrichtung beinhaltet die Schritte:
i) ggf. Entfernen des Deckels;
ii) Entnahme der Filteranordnung aus der Luftzuführeinrichtung, insbesondere durch Ergreifen des Griffteils;
iii) Aufbiegen der ersten radialen Vorsprünge, um die Klemmung des Filterteils zu lösen;
iv) Entnahme und Austausch des Filterteils;
v) Schritt d) und Schritt e), wie vorstehend definiert;
vi) Einsetzen der Filteranordnung in die Luftzuführeinrichtung, ggf. durch Ergreifen des Griffteils;
vii) ggf. (Wieder-) Anbringen des Deckels.

Folgende konkrete Ausgestaltungen der Erfindung haben sich aus Sicht der Anmelderin als besonders vorteilhaft erwiesen:
Bei einer ersten Weiterbildung der erfindungsgemäßen Filteranordnung kann der Klemmring per Laserschnitt, Wasserstrahl-Schnitt oder durch Stanzen aus dem Blechmaterial hergestellt sein.

Dadurch wird die Herstellung sehr vereinfacht und verbilligt, weil grundsätzlich nur noch ein einziger Prozessschritt bei der Herstellung erforderlich ist.

Bei einer anderen Weiterbildung der erfindungsgemäßen Filteranordnung können die ersten radialen Vorsprünge reversibel nach außen und innen hin- und zurückbiegbar sein.

Reversibel bedeutet, dass dieser Prozess mehrfach erfolgen kann, ohne dass der Klemmring beschädigt wird. Er kann somit bei Austausch des Filtermaterials mehrfach wiederverwendet werden, was besonders nachhaltig ist.

Bei wieder einer anderen Weiterbildung der erfindungsgemäßen Filteranordnung können wenigstens einige der ersten radialen Vorsprünge an ihren dem Grundkörper abgewandten Außenseiten eine Anzahl von ersten Haltevorsprüngen, vorzugsweise Haltespitzen, für das Filterteil aufweisen.

Hierdurch lässt sich erreichen, dass das Filterteil nach dem Umbiegen der ersten radialen Vorsprünge nicht mehr verrutschen kann, worauf schon hingewiesen wurde.

Bei noch einer anderen Weiterbildung der erfindungsgemäßen Filteranordnung kann der Klemmring über einen inneren Umfang des Grundkörpers verteilt eine Anzahl von zweiten Haltevorsprüngen, vorzugsweise Haltespitzen, für das Filterteil aufweisen.

Hierdurch lässt sich der beschriebene Effekt, wonach das Filterteil nach dem Umbiegen der ersten radialen Vorsprünge nicht mehr verrutschen kann, noch verstärken.

Bei einer anderen vorteilhaften Weiterbildung der erfindungsgemäßen Filteranordnung können die zweiten Haltevorsprünge in Umfangsbereichen angeordnet sind, die denjenigen Umfangsbereichen entsprechen, in denen auch die ersten radialen Vorsprünge ausgebildet sind.

Die Anmelderin hat herausgefunden, dass sich auf diese Weise die Haltewirkung auf das Filterteil besonders günstig gestaltet.

Bei einer anderen besonders vorteilhaften Weiterbildung der erfindungsgemäßen Filteranordnung kann der Klemmring an dem inneren Umfang des Grundkörpers wenigstens ein vorzugsweise einstückig angeformtes Griffteil, vorzugsweise zwei aneinander diametral gegenüberliegende Griffteile, aufweisen. Das Griffteil kann vorzugsweise aus der genannten Ebene herausgebogen oder herausbiegbar sein und sich insbesondere nach dem Herausbiegen im Wesentlichen senkrecht zu der Ebene und von dem Grundkörper weg erstrecken.

Es wurde schon darauf hingewiesen, dass ein solches Griffteil die Handhabung der Filteranordnung stark erleichtert, insbesondere bei einem erforderlichen Austausch zu Wartungszwecken.

Bei einer anderen ganz besonders vorteilhaften Weiterbildung der erfindungsgemäßen Filteranordnung kann der Klemmring über den äußeren Umfang des Grundkörpers verteilt eine Mehrzahl von zweiten radialen Vorsprüngen aufweisen, die von dem Grundkörper abragen. Von diesen zweiten radialen Vorsprüngen können zumindest einige etwa rechtwinklig zu der genannten Ebene abgewinkelt, d.h. umgeformt sein, und zwar insbesondere zu derselben Seite wie die ersten radialen Vorsprünge.

Die zweiten radialen Vorsprünge können zwei Zwecken dienen: einerseits können sie, sofern sie nicht abgewinkelt sind, dazu verwendet werden, die Filteranordnung auf der axialen Stirnseite oder -Fläche eines Luftführungselements aufzulegen; andererseits können sie, nach erfolgter Abwinkelung, zum Zentrieren der Filteranordnung innerhalb eines Luftführungselements eingesetzt werden. Dadurch wird die Verwendungssicherheit der Filteranordnung weiter verbessert.

Um seiner Dichtwirkung umfassend nachzukommen, kann bei einer anderen Weiterbildung der erfindungsgemäßen Filteranordnung der Dichtungsring aus einem geschlossenporigen Schaumstoff-Material gebildet sein, insbesondere PUR (Polyurethan) oder EPDM (Ethylen-Propylen-Dien-Kautschuk). Die Erfindung ist diesbezüglich jedoch nicht auf eine bestimmte Materialauswahl festgelegt; alle Dichtungsmaterialien mit vergleichbaren Eigenschaften können vorteilhaft eingesetzt werden.

Besonders einfach gestaltet sich die Herstellung der Filteranordnung, wenn bei einer wieder anderen Weiterbildung der erfindungsgemäßen Filteranordnung der Dichtungsring mit einer Klebeseite auf den Grundkörper aufgeklebt ist.

Noch weiter vereinfacht sich die Herstellung der Filteranordnung, wenn bei einer wieder anderen Weiterbildung der erfindungsgemäßen Filteranordnung der Dichtungsring an der Klebeseite selbstklebend ausgebildet ist.

Es hat sich also besonders vorteilhaft herausgestellt, wenn bei einer Ausgestaltung der erfindungsgemäßen Filteranordnung der Dichtungsring auf einer von den zurückgebogenen ersten radialen Vorsprüngen abgewandten Seite des Grundkörpers angeordnet ist, weil diese Seite insbesondere glatt bzw. eben ausgebildet ist und deshalb die Anbringung des Dichtungsrings erleichtert.

Bei bestimmten Ausgestaltungen der erfindungsgemäßen Filteranordnung kann es jedoch von Vorteil sein, insbesondere wenn die genannten zweiten radialen Vorsprünge vorgesehen sind, den Dichtungsring auf derselben Seite des Grundkörpers anzuordnen wie die zurückgebogenen ersten radialen Vorsprünge, damit der Dichtungsring bestimmungsgemäß innerhalb des Luftführungselements seinen Platz finden kann.

Bei noch einer anderen Ausgestaltung der erfindungsgemäßen Filteranordnung weist der Dichtungsring gegenüber dem Klemmring, vorzugsweise mit Ausnahme der nicht abgewinkelten zweiten radialen Vorsprünge, ein Übermaß in radialer Richtung auf, vorzugsweise vollumfänglich.

Dies erhöht die Dichtwirkung und kann zugleich einen Zentriereffekt bewirken, worauf schon hingewiesen wurde.

Bei einer Ausgestaltung der erfindungsgemäßen Luftzuführeinrichtung kann vorgesehen sein, dass die Filteranordnung zumindest teilweise in dem Luftführungselement angeordnet ist.

So eine Anordnung kommt insbesondere in Betracht, wenn die Luftzuführeinrichtung keine gesondert Ansaughaube aufweist.

Bei einer Ausgestaltung der erfindungsgemäßen Luftzuführeinrichtung kann jedoch vorgesehen sein, dass diese eine endständige Ansaughaube aufweist, die mit dem Luftführungselement fluidleitend verbunden ist.

Eine solche Ansaughaube kann umfängliche mehrere Lufteinlässe oder Lufteinlassschlitze aufweisen und schließt vorteilhafter Weise die Luftzuführeinrichtung gebäudeaußenseitig gegenüber Witterungseinflüssen ab.

Bei einer entsprechenden Ausgestaltung der erfindungsgemäßen Luftzuführeinrichtung kann dann vorgesehen sein, dass die Filteranordnung zumindest teilweise in der Ansaughaube angeordnet ist, was die Zugänglichkeit erleichtern kann.

Insbesondere dann, wenn die Ansaughaube eine Öffnung mit einem die Öffnung verschließenden, abnehmbaren Deckel aufweist, durch die die Filteranordnung entnehmbar und einsetzbar ist, kann das Einsetzen und Austauschen der Filteranordnung stark vereinfacht sein.

Bei einer anderen Ausgestaltung der erfindungsgemäßen Luftzuführeinrichtung kann weiterhin vorgesehen sein, dass die Filteranordnung in der Luftzuführeinrichtung festgelegt oder festlegbar ist, indem die Luftzuführeinrichtung im Bereich des Luftführungselements oder, sofern vorhanden, im Bereich der Ansaughaube eine Anzahl von nach innen gerichteten Auflagevorsprüngen aufweist. Diese können insbesondere als ein durchgehend umlaufender Auflagevorsprung, z.B. in Form einer Sicke oder eines umgebördelten Randes, ausgebildet sein. Auf den Vorsprüngen / dem Vorsprung kann die Filteranordnung in einem Randbereich des Grundkörpers aufliegen.

Somit ist eine einfache Möglichkeit geschaffen, die Filteranordnung innerhalb der erfindungsgemäßen Luftzuführeinrichtung festzulegen, vorzugsweise allein durch Wirkung der Schwerkraft, wenn die Auflagevorsprünge entsprechend geeignet angeordnet sind.

Bei einer wieder anderen Ausgestaltung der erfindungsgemäßen Luftzuführeinrichtung kann dagegen weiterhin vorgesehen sein, dass die Filteranordnung in der Luftzuführeinrichtung festgelegt oder festlegbar ist, indem die Luftzuführeinrichtung im Bereich des Luftführungselements oder, sofern vorhanden, im Bereich der Ansaughaube eine Auflagefläche, insbesondere eine stirnseitige Auflagefläche, z.B. eine endständige Schnittkante, aufweist. Die Filteranordnung kann dann mit den nicht abgewinkelten zweiten radialen Vorsprüngen an bzw. auf der genannten Auflagefläche aufliegen.

Gegenüber der zuvor beschriebenen Lösung kann dies den Vorteil bieten, dass keine zusätzliche Ausbildung von Auflagevorsprüngen erforderlich ist, weil praktisch jedes Luftführungselement eine solche (stirnseitige) Auflagefläche ohne Weiteres umfasst.

Es wurde schon darauf hingewiesen, dass bei einer entsprechenden Ausgestaltung der erfindungsgemäßen Luftzuführeinrichtung die Filteranordnung durch den Dichtungsring und/oder, sofern vorhanden, durch die abgewinkelten zweiten radialen Vorsprünge in der Luftzuführeinrichtung zentriert sein kann.

Zusammenfassend ergeben sich im Rahmen der vorliegenden Erfindung insbesondere die nachfolgend genannten Vorteile: Reduzierung der erforderlichen Werkzeugvielfalt, Reduzierung der Fertigungsschritte und damit kostengünstige Herstellung, Gewährleistung der Dichtheit sowie einfache Montage/Demontage bzw. einfacher Austausch des Filterteils bzw. -Materials.

Weitere Eigenschaften und Vorteile der Erfindung ergeben sich aus der nachfolgenden Beschreibung von Ausführungsbeispielen anhand der Zeichnung.
Figur 1 zeigt eine erste Ausgestaltung des Klemmrings;
Figur 2 zeigt den Klemmring aus Figur 1 mit radial nach innen zurückgebogenen ersten radialen Vorsprüngen;
Figur 3 zeigt eine zweite Ausgestaltung des Klemmrings;
Figur 4 zeigt den Klemmring aus Figur 3 mit radial nach innen zurückgebogenen ersten radialen Vorsprüngen und aus einer Ebene des Klemmrings herausgebogenen Griffteilen;
Figur 5 zeigt den Einsatz einer erfindungsgemäßen Filteranordnung bei einer Luftzuführeinrichtung in einer teilweisen Explosionsdarstellung;
Figur 6 zeigt die Elemente aus Figur 5 in einem zusammengesetzten Zustand und in einer Schnittansicht;
Figur 7 zeigt eine Ausschnittsvergrößerung aus Figur 6;
Figur 8 zeigt eine Ausschnittsvergrößerung aus Figur 6 in perspektivischer Darstellung;
Figur 9 zeigt eine Ausschnittsvergrößerung aus Figur 8; und
Figur 10 zeigt eine leicht abgewandelte Ausgestaltung des Klemmrings aus Figur 3 und seine bevorzugte Verwendung.

In allen Figuren bezeichnen gleiche Bezugszeichen gleiche oder zumindest gleichwirkende Elemente.

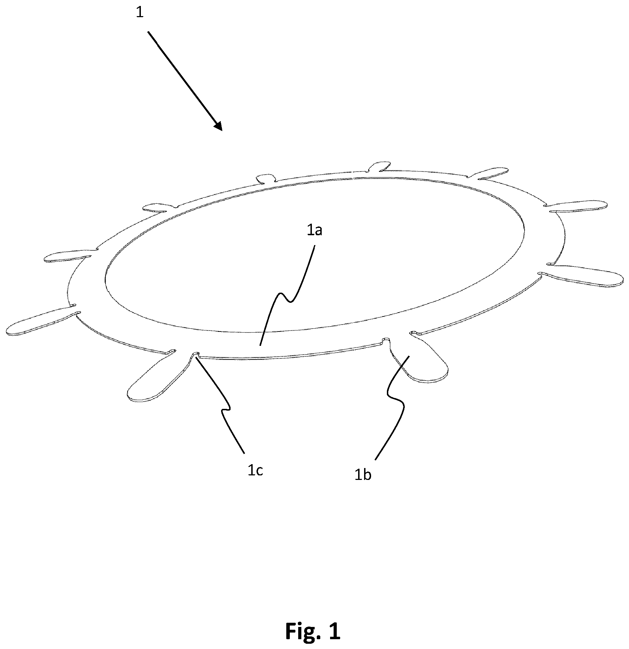

In der Figur 1 ist eine erste Ausgestaltung eines Klemmrings 1 gezeigt, wie er bei einer erfindungsgemäßen Filteranordnung für eine Luftzuführeinrichtung zum Einsatz kommen kann.

Der Klemmring 1 ist in der Figur 1 in seinem unverformten Lieferzustand gezeigt; er ist als einfaches Brenn-, Scheid- oder Stanzteil aus Blech hergestellt, z.B. aus (Edel-) Stahl.

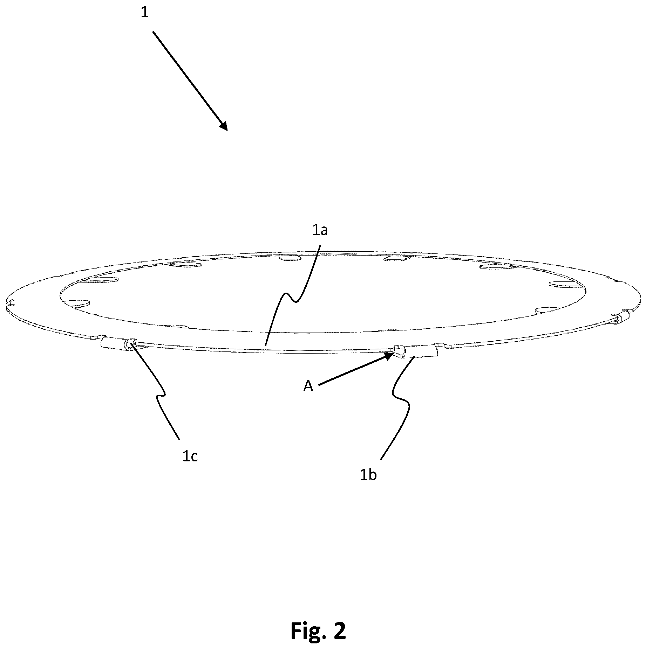

Der Klemmring 1 bei besitzt einen ebenen Grundkörper 1a, der über seinen äußeren Umfang verteilt eine Mehrzahl von ersten radialen Vorsprüngen 1b aufweist, die von dem Grundkörper abragen. Die radialen Vorsprüngen 1b radial nach innen zurückbiegbar (vgl. Figur 2), so dass sie sich dann (d.h. nach der Umformung) insbesondere parallel zu einer Ebene des Grundkörpers 1a erstrecken. Zwecks vereinfachter Biegbarkeit kann der Grundkörper 1a seitlich der Vorsprünge 1b Ausnehmungen 1c aufweisen. Die freien Enden der der Vorsprünge 1b können abgerundet ausgebildet sein, wie gezeigt.

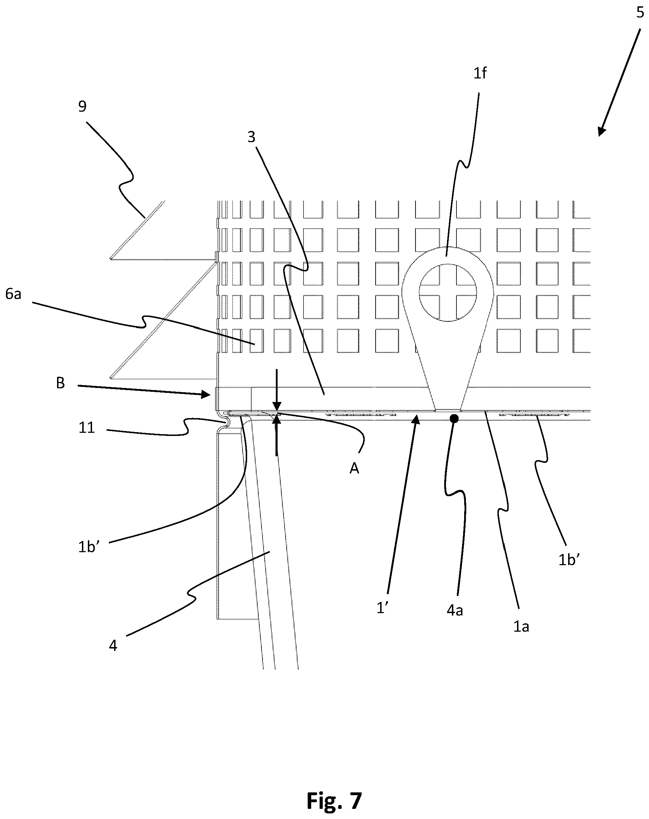

Nach dem bereits erwähnten Umbiegen/Umformen erstrecken sich die Vorsprünge 1b, wie aus der Figur 2 ersichtlich ist, parallel zu der genannten Ebene des Grundkörpers 1a und weisen jeweils einen (kleinen) endlichen Abstand A zu dem Grundkörper 1a auf, wie man insbesondere den Figuren 7-9 entnimmt, obwohl diese eine etwas andere Ausgestaltung des Klemmrings 1 zeigen. Zwischen den zurückgebogenen Vorsprüngen 1b und dem Grundkörper 1a kann im Bereich des Abstands A ein Filtermaterial bzw. ein Filterteil (nicht gezeigt) eingeklemmt und klemmend gehalten werden, worauf weiter unten noch genauer eingegangen wird.

Aufgrund der Materialwahl für den Klemmring können die Vorsprünge 1b mehrfach hin- und her gebogen werden, ohne beschädigt zu werden, so dass die genannte Klemmwirkung (beliebig) oft reproduzierbar ist.

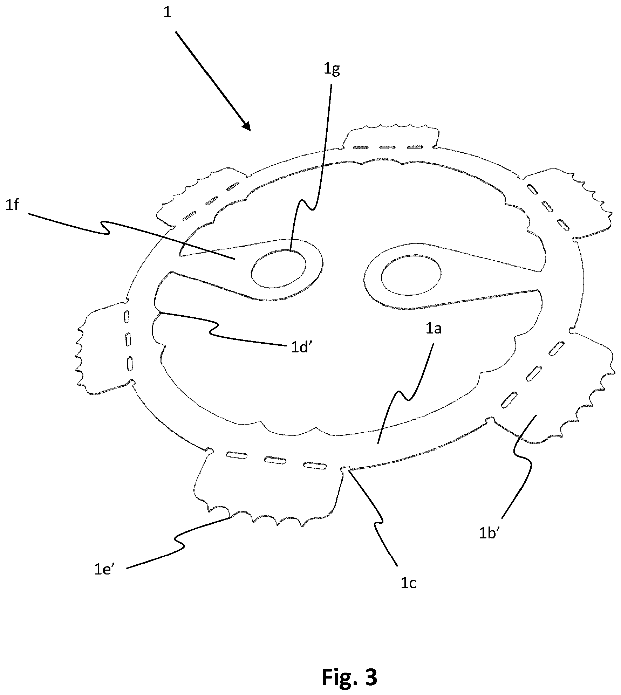

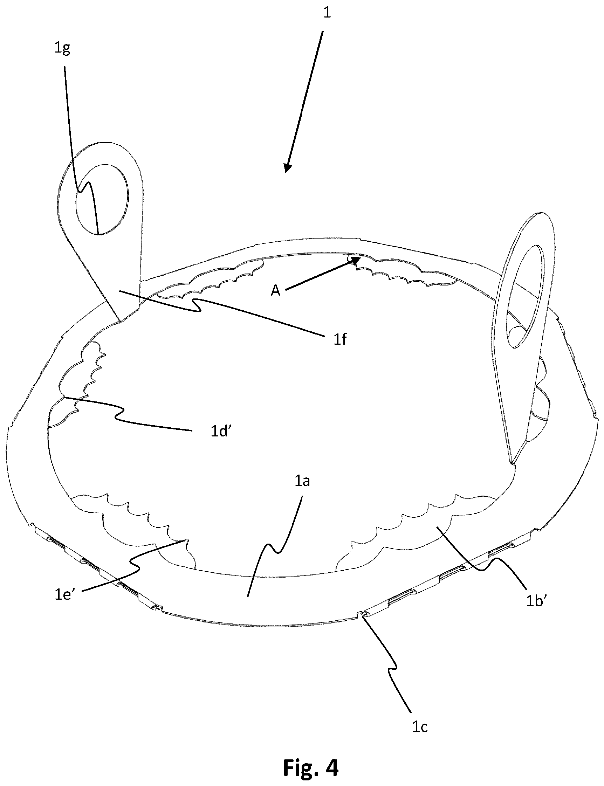

Die Figuren 3 und 4 zeigen zwei Ansichten eines etwas anders ausgebildeten Klemmrings 1'. Dieser weist zusätzlich über einen inneren Umfang des Grundkörpers 1a verteilt eine Anzahl von zweiten Haltevorsprüngen 1d' auf, die als Haltespitzen zum für das Filterteil (nicht gezeigt) ausgebildet sind. Die zweiten Haltevorsprünge 1d' sind in solchen Umfangsbereichen angeordnet, die denjenigen Umfangsbereichen entsprechen, in denen auch die ersten radialen Vorsprünge 1b' ausgebildet sind. Letztere sind leicht abweichend von der Ausgestaltung in den Figuren 1 und 2 ausgebildet, und zwar einerseits breiter (in Umfangsrichtung) und andererseits durch Hinzufügen weiterer Haltevorsprünge bzw. Haltespitzen 1e' für das Filterteil (nicht gezeigt), die an dem Grundkörper 1a abgewandten Außenseiten der ersten radialen Vorsprünge 1b' angeordnet sind.

Die Erfindung ist insbesondere hinsichtlich Anzahl und Form der Haltevorsprünge 1d', 1e' nicht beschränkt.

Außerdem weist der Klemmring 1' an dem inneren Umfang seines Grundkörpers 1a noch zwei einstückig angeformte Griffteile 1f mit jeweils einer Eingrifföffnung 1g auf, die vorzugsweise aus der Ebene des Grundkörpers 1a herausbiegbar sind, wie man speziell in der Figur 4 erkennt. Nach dem Herausbiegen erstrecken sich die Griffteile 1f im Wesentlichen senkrecht zu der genannten Ebene und von dem Grundkörper 1a weg. Gemäß der Figur 4 sind auch die die ersten radialen Vorsprünge 1b' ausgehend von dem Lieferzustand in Figur 3 wieder radial nach innen umgeformt, wie weiter oben betreffend Figur 2 beschrieben.

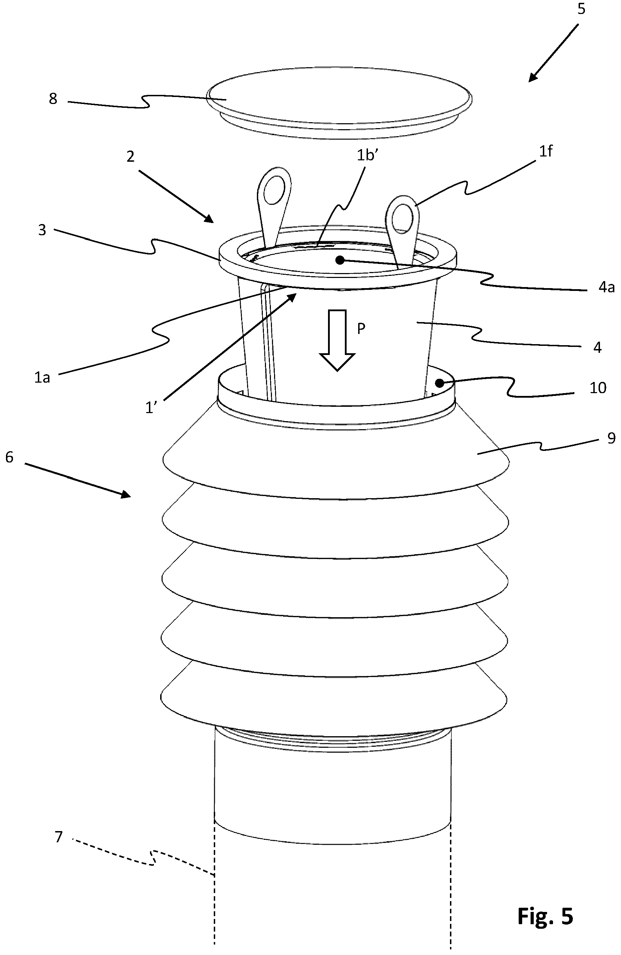

In der Figur 5 ist gezeigt, wie eine erfindungsgemäße Filteranordnung für eine Luftzuführeinrichtung bestimmungsgemäß verwendet wird. Die Filteranordnung ist mit dem Bezugszeichen 2 bezeichnet und umfasst neben dem Klemmring 1' (vgl. Figuren 3 und 4) noch einen Dichtungsring 3 sowie ein Filterteil 4, auf das schon mehrfach hingewiesen wurde.

Der Dichtungsring 3, der aus einem geschlossenporigen Schaumstoff-Material gebildet sein kann, insbesondere aus PUR oder EPDM, ist konzentrisch an dem Grundkörper 1a des Klemmrings 1' befestigt, bevorzugt angeklebt, und zwar auf einer den umgebogen ersten radialen Vorsprüngen 1b' abgewandten Seite. Das Filterteil 4 besteht aus einem geeigneten Luft-Filtermaterial, z.B. Filterwatte oder ein Vliesmaterial, und weist eine Taschen- oder Beutelform mit einer Öffnung 4a auf. Mit einem Randbereich dieser Öffnung 4a ist es zwischen dem Grundkörper 1a und den zurückgebogenen ersten radialen Vorsprüngen 1b' klemmend gehalten, was in den Figuren 7 bis 9 noch genauer zu erkennen ist. Die Taschenform des Filterteils 4 erstreckt sich zu der von den Dichtungsring 3 abgewandten Seite.

Die Luftzuführeinrichtung ist in der Figur 5 mit dem Bezugszeichen 5 bezeichnet. Sie umfasst eine endständige Ansaughaube 6, die mit einen rohrförmigen Luftführungselement 7 fluidleitend verbunden ist. Die Ansaughaube 6 umfasst einen abnehmbaren Deckel 8 und ein umfängliches Luftansauggitter (hier nicht erkennbar), das durch Lamellen in Form von kegelstumpfförmigen Ringteilen 9 abgedeckt ist. Der Deckel verschließt eine (obere) Öffnung 10 der Ansaughaube 6.

Zur Herstellung der Filteranordnung 2 wird insbesondere folgendermaßen verfahren:
a) Bereitstellen des Klemmrings 1';
b) Bereitstellen des Dichtungsrings 3; und
c) Bereitstellen des taschen- oder beutelförmigen Filterteils 4;
d) Anordnen des Filterteils 4 an dem Klemmring 1', so dass der Rand der Öffnung 4a flächig vollumfänglich an dem Grundkörper 1a anliegt;
e) Zurückbiegen der ersten radialen Vorsprünge 1b' radial nach innen auf diejenige Seite der Klemmrings 1', an der das Filterteil 4 anliegt, so dass sie sich parallel zu einer Ebene des Grundkörpers 1a erstrecken und jeweils einen Abschnitt des Randes der Öffnung 4a des Filterteils 4 klemmend gegen den Grundkörper 1a halten;
f) konzentrisches Anbringen des Dichtungsrings 3 an dem Grundkörper 1a.

Das Filterteil 4 bzw. die fertige Filteranordnung 2 wird dann durch Ergreifen der Griffteile 1f des Klemmrings 1' mit der Taschen- oder Beutelform voran durch die Öffnung 10 in der Ansaughaube 6 in Richtung des Pfeils P in die Luftzuführeinrichtung 5 eingesetzt, und diese wird anschließend mittels des Deckels 8 verschlossen. Bei einer Entnahme des Filterteils 4 wird umgekehrt vorgegangen.

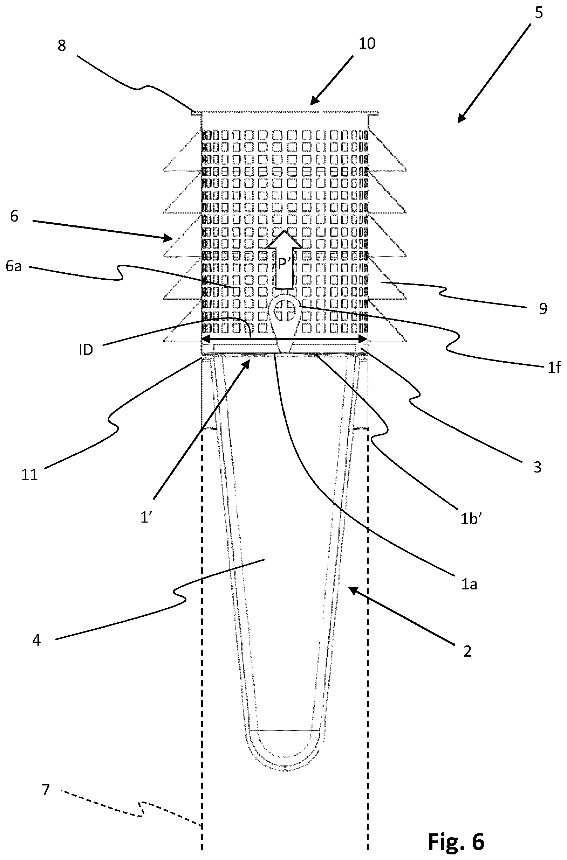

Figur 6 zeigt in einem Längsschnitt durch die (zusammengesetzte) Luftzuführeinrichtung 5 aus Figur 5, wie das Filterteil 4 innerhalb der Luftzuführeinrichtung 5 angeordnet ist. Das Luftführungselement 7 ist hier nur teilweise (gestrichelt) dargestellt. Der Klemmring 1' liegt mit seiner dem Dichtungsring 3 abgewandten Unterseite auf einer umlaufenden, radial nach innen vorspringenden Sicke 11 oder einer vergleichbar vorspringenden Struktur auf, z.B. einen umgebördelten Rand, die in einen unteren Bereich der Ansaughaube 6 unterhalb des Luftansauggitters 6a ausgebildet ist. Die Sicke 11 bzw. der Vorsprung muss nicht durchgängig-umlaufend ausgebildet sein; auch mehrere Sicken oder Vorsprünge kommen in Betracht.

Der elastisch verformbare Dichtungsring 3 weist gegenüber einem lichten Innendurchmesser ID der Ansaughaube 6 und gegenüber dem Klemmring 1' bevorzugt ein (geringes) Übermaß von ca. 1 mm auf. Dies kann für eine besonders gute Abdichtung sorgen und zudem eine Zentrierwirkung haben.

Zum Entnehmen der Filteranordnung 2 ergreift man die Griffteile 1f und entnimmt die Filteranordnung 2 in Richtung des Pfeils P' (nach Entfernen des Deckels 8).

Entsprechend wird bei der Wartung der Luftzuführeinrichtung 5 vorzugsweise wie folgt verfahren:
i) Entfernen des Deckels 8;
ii) Entnahme der Filteranordnung 2 aus der Luftzuführeinrichtung 5 durch Ergreifen der Griffteile 1f;
iii) Aufbiegen der ersten radialen Vorsprünge 1b', um die Klemmung des Filterteils 4 zu lösen;
iv) Entnahme und Austausch des Filterteils;
v) Schritt d) und Schritt e) gemäß dem Vorgehen bei der Herstellung der Filteranordnung 2;
vi) Einsetzen der Filteranordnung 2 in die Luftzuführeinrichtung 5 durch Ergreifen der Griffteile 1f;
vii) Anbringen des Deckels 8.

Figur 7 zeigt eine Detailvergrößerung aus Figur 6 (ohne das Luftführungselement 7). Man erkennt hier besonders gut zum einen den bereits erwähnten Abstand A und die Klemmung des Filterteils 4 mit dem Rand seiner Öffnung 4a zwischen Grundkörper 1a und den umgebogenen Vorsprüngen 1b' des Klemmrings 1' und zum anderen die Sicke 11, auf der der Klemmring 1' aufliegt. Auch das erwähnte Übermaß ist schematisch angedeutet (bei Bezugszeichen B).

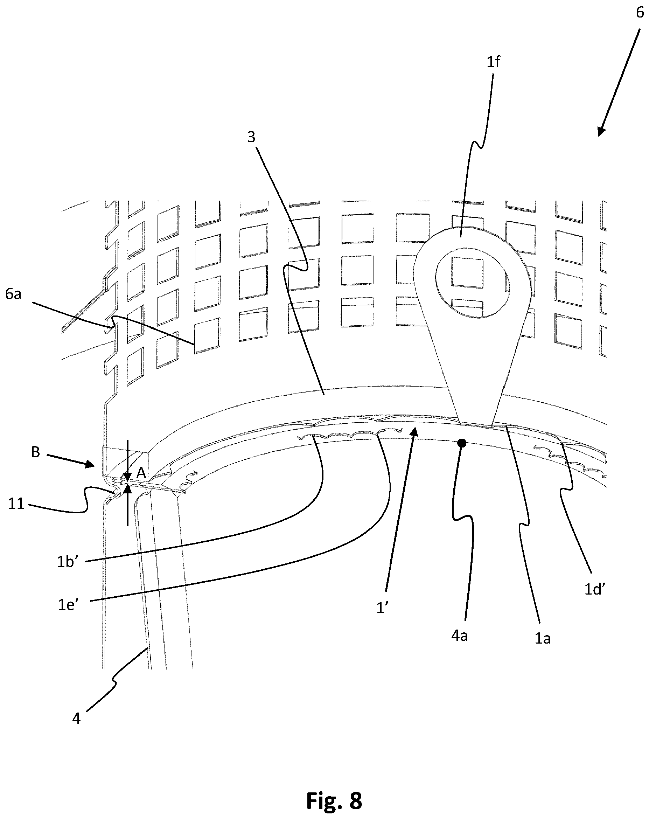

Figur 8 zeigt denselben Gegenstand wie die Figur 7 aus einer leicht anderen Perspektive. Hierbei ist gut erkennbar, wie die Haltespitzen 1d', 1e' des Klemmrings 1' in das (Filter-) Material des Filterteils 4 teilweise eingreifen, um für einen verbesserten Halt zu sorgen. Da das Filterteil 4 aber weder nass wird noch substantiell in der axialen Richtung belastet wird, ist ein Zerreißen des Filtermaterials nicht zu befürchten.

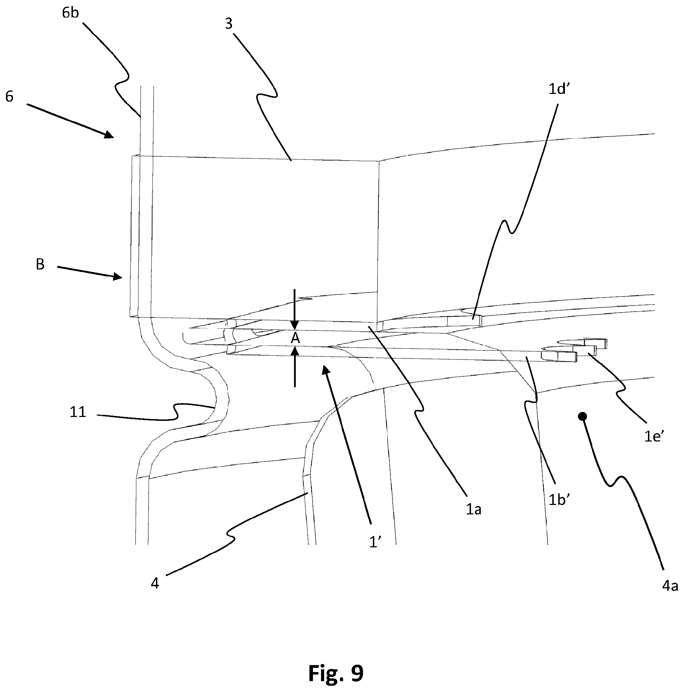

Figur 9 zeigt eine weitere Detailvergrößerung basierend auf der Figur 8. Das Übermaß des Dichtungsrings 3 ist hier bei B deutlich erkennbar (in der Realität komprimiert die Wand 6b der Ansaughaube 6 das Material des Dichtungsrings 3, der selbstverständlich vollständig innerhalb der Ansaughaube 6 angeordnet ist - abweichend von der vorliegenden konzeptuellen Darstellung).

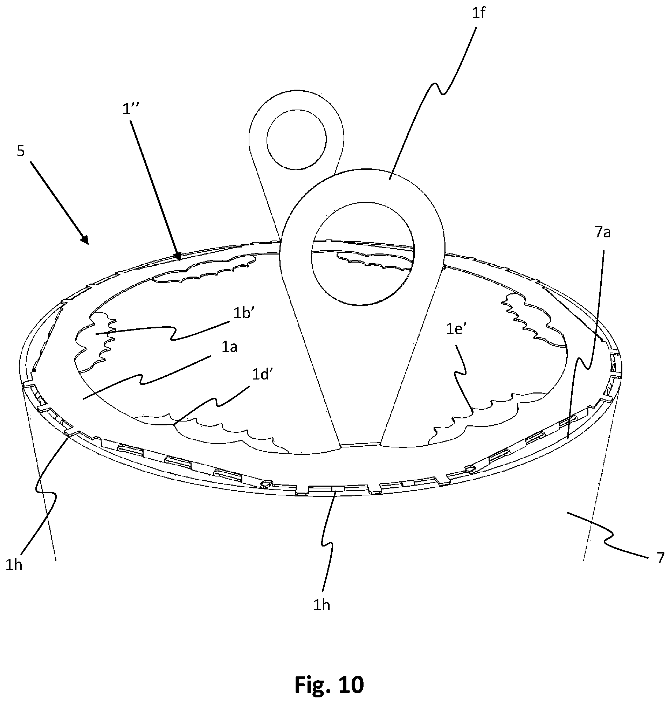

In der Figur 10 ist gezeigt, dass der Klemmring 1" (hier ohne Filterteil) gemäß einer Variante auch anderweitig in der Luftzuführeinrichtung 5 gehalten sein kann. Bei der gezeigten Variante weist der Klemmring 1" über den äußeren Umfang des Grundkörpers 1a verteilt eine Mehrzahl von zweiten radialen Vorsprüngen 1h auf, die von dem Grundkörper abragen und von denen zumindest einige etwa rechtwinklig zu der genannten Ebene abgewinkelt sind, d.h. umgeformt umgebogen, insbesondere zu derselben Seite wie die ersten radialen Vorsprünge 1b'.

Genauer gesagt sind immer Gruppen von (ohne Beschränkung) fünf zweiten radialen Vorsprüngen 1h vorgesehen, von denen jeder zweite um etwa 90 Grad zur Ebene des Grundkörpers 1a nach unten abgewinkelt ist. Diese abgewinkelten zweiten radialen Vorsprüngen 1h sorgen für eine Klemmung und/oder Zentrierung der Filteranordnung bzw. des Klemmrings 1" in dem gezeigten Luftführungselement 7, während die nicht abgewinkelten zweiten radialen Vorsprüngen 1h dafür sorgen, dass die Filteranordnung bzw. der Klemmring 1" auf einer Auflagefläche, insbesondere einer stirnseitigen Auflagefläche 7a, des Luftführungselements 7 aufliegt.

Der Dichtungsring (nicht gezeigt) ist bei dieser Ausgestaltung bevorzugt unterhalb des Klemmrings 1" angeordnet, d.h. auf derselben Seite wie die umgebogenen ersten radialen Vorsprünge 1b' und somit innerhalb des Luftführungselements 7.

Wie der Fachmann leicht erkennt, sind die in den Figuren 3-10 gezeigten Weiterbildungen, insbesondere im Zusammenhang mit den Haltespitzen und/oder den zweiten radialen Vorsprüngen ohne Weiteres auch ausgehend von dem Klemmring 1 gemäß den Figuren 1 und 2 realisierbar.

## Patentansprüche

1. Filteranordnung (2) für eine Luftzuführeinrichtung (5), aufweisend:
einen Klemmring (1, 1', 1") aus einem Blechmaterial;
einen Dichtungsring (2); und
ein Filterteil (4) aus einem Filtermaterial;
bei der der Klemmring (1, 1', 1") einen Grundkörper (1a) und über dessen äußeren Umfang verteilt eine Mehrzahl von ersten radialen Vorsprüngen (1b, 1b') aufweist, die von dem Grundkörper (1a) abragen, radial nach innen zurückgebogen sind, so dass sie sich parallel zu einer Ebene des Grundkörpers (1a) erstrecken und jeweils in einem endlichen Abstand (A) zu dem Grundkörper (1a) angeordnet sind;
bei der der Dichtungsring (3) konzentrisch an dem Grundkörper (1a) befestigt ist; und
bei der das Filterteil (4) eine Taschen- oder Beutelform mit einer Öffnung (4a) aufweist und mit einem Randbereich der Öffnung (4a) zwischen dem Grundkörper (1a) und den zurückgebogenen ersten radialen Vorsprüngen (1b, 1b') klemmend gehalten ist.

2. Filteranordnung (2) nach Anspruch 1, bei der die ersten radialen Vorsprünge (1b, 1b') reversibel nach außen und innen hin- und zurückbiegbar sind.

3. Filteranordnung (2) nach einem der vorangehenden Ansprüche, bei der wenigstens einige der ersten radialen Vorsprünge (1b') an ihren dem Grundkörper (1a) abgewandten Außenseiten eine Anzahl von ersten Haltevorsprüngen (1e'), vorzugsweise Haltespitzen (1e'), für das Filterteil (4) aufweisen.

4. Filteranordnung (2) nach einem der vorangehenden Ansprüche, bei der der Klemmring (1', 1") über einen inneren Umfang des Grundkörpers (1a) verteilt eine Anzahl von zweiten Haltevorsprüngen (1d'), vorzugsweise Haltespitzen (1d'), für das Filterteil (4) aufweist.

5. Filteranordnung (2) nach Anspruch 3 und Anspruch 4, bei der die zweiten Haltevorsprünge (1d') in Umfangsbereichen angeordnet sind, die denjenigen Umfangsbereichen entsprechen, in denen auch die ersten radialen Vorsprünge (1b') ausgebildet sind.

6. Filteranordnung (2) nach einem der vorangehenden Ansprüche, bei der der Klemmring (1") über den äußeren Umfang des Grundkörpers (1a) verteilt eine Mehrzahl von zweiten radialen Vorsprüngen (1h) aufweist, die von dem Grundkörper (1a) abragen und von denen zumindest einige etwa rechtwinklig zu der genannten Ebene abgewinkelt sind, insbesondere zu derselben Seite wie die ersten radialen Vorsprünge (1b').

7. Filteranordnung (2) nach einem der vorangehenden Ansprüche, bei der der Dichtungsring (3) auf einer von den zurückgebogenen ersten radialen Vorsprüngen (1b') abgewandten Seite des Grundkörpers (1a) angeordnet ist oder, insbesondere bei Rückbezug auf Anspruch 6, auf derselben Seite des Grundkörpers (1a) wie die zurückgebogenen ersten radialen Vorsprünge (1b').

8. Filteranordnung (2) nach einem der vorangehenden Ansprüche, bei der der Dichtungsring (3) gegenüber dem Klemmring (1'), vorzugsweise mit Ausnahme der nicht abgewinkelten zweiten radialen Vorsprünge (1h) gemäß Anspruch 6, ein Übermaß in radialer Richtung aufweist, vorzugsweise vollumfänglich.

9. Luftzuführeinrichtung (5), insbesondere für Wohnräume, mit einer Filteranordnung (2) nach einem der vorangehenden Ansprüche und mit wenigstens einem rohrförmigen Luftführungselement (7), in welche die Filteranordnung (2) herausnehmbar eingesetzt ist, wobei vorzugsweise die Filteranordnung (2) zumindest teilweise in dem Luftführungselement (7) angeordnet ist.

10. Luftzuführeinrichtung (5) nach Anspruch 9 mit einer endständigen Ansaughaube (6), die mit dem Luftführungselement (7) fluidleitend verbunden ist, wobei vorzugsweise die Filteranordnung (2) zumindest teilweise in der Ansaughaube (6) angeordnet ist.

11. Luftzuführeinrichtung (5) nach Anspruch 10, bei der die Ansaughaube (6) eine Öffnung (10) mit einem die Öffnung (10) verschließenden, abnehmbaren Deckel (8) aufweist, durch die die Filteranordnung (2) entnehmbar und einsetzbar ist.

12. Luftzuführeinrichtung (5) nach einem der Ansprüche 9 bis 11, bei der die Filteranordnung (2) in der Luftzuführeinrichtung (5) festgelegt oder festlegbar ist, indem die Luftzuführeinrichtung (5) im Bereich des Luftführungselements (7) oder, bei Bezugnahme auf zumindest Anspruch 10, im Bereich der Ansaughaube (6) eine Anzahl von nach innen gerichteten Auflagevorsprüngen, insbesondere einen durchgehend umlaufenden Auflagevorsprung (11), z.B. in Form einer Sicke (11) oder eines umgebördelten Randes, aufweist, auf denen/dem die Filteranordnung (2) in einem Randbereich des Grundkörpers (1a) aufliegt.

13. Luftzuführeinrichtung (5) nach einem der Ansprüche 9 bis 11, bei der die Filteranordnung (2) in der Luftzuführeinrichtung (5) festgelegt oder festlegbar ist, indem die Luftzuführeinrichtung (5) im Bereich des Luftführungselements (7) oder, bei Bezugnahme auf zumindest Anspruch 10, im Bereich der Ansaughaube (6) eine Auflagefläche (7a), insbesondere eine stirnseitige Auflagefläche (7a), aufweist, und die Filteranordnung (2), bei Rückbezug auf Anspruch 6, mit den nicht abgewinkelten zweiten radialen Vorsprüngen (1h) an der genannte Auflagefläche (7a) aufliegt.

14. Luftzuführeinrichtung (5) nach einem der Ansprüche 9 bis 13, bei der die Filteranordnung (2) durch den Dichtungsring (3) und/oder, bei Rückbezug auf Anspruch 6, durch die abgewinkelten zweiten radialen Vorsprünge (1h) in der Luftzuführeinrichtung (5) zentriert ist.

15. Verfahren zur Herstellung einer Filteranordnung (2), insbesondere der Filteranordnung (2) nach einem der Ansprüche 1 bis 8, mit den Schritten:
a) Bereitstellen eines Klemmrings (1, 1', 1") aus einem Blechmaterial, der einen Grundkörper (1a) und über dessen äußeren Umfang verteilt eine Mehrzahl von ersten radialen Vorsprüngen (1b, 1b') aufweist, die von dem Grundkörper (1a) abragen;
b) Bereitstellen eines Dichtungsrings (3); und
c) Bereitstellen eines taschen- oder beutelförmigen Filterteils (4) aus einem Filtermaterial mit einer Öffnung (4a);
d) Anordnen des Filterteils (4) an dem Klemmring (1, 1', 1"), so dass ein Rand der Öffnung (4a) flächig vollumfänglich an dem Grundkörper (1a) anliegt;
e) Zurückbiegen der ersten radialen Vorsprünge (1b, 1b') radial nach innen auf diejenige Seite der Klemmrings (1, 1', 1"), an der das Filterteil (4) anliegt, so dass sie sich parallel zu einer Ebene des Grundkörpers (1a) erstrecken und jeweils einen Abschnitt des Randes der Öffnung (4a) des Filterteils (4) klemmend gegen den Grundkörper (1a) halten;
f) konzentrisches Anbringen des Dichtungsrings (3) an dem Grundkörper (1a).

## Claims

1. Filter arrangement (2) for an air supply device (5), having:
a clamping ring (1, 1', 1") made of a sheet metal material;
a sealing ring (2); and
a filter component (4) made of a filter material;
in which the clamping ring (1, 1', 1") has a base body (1a) and in a state distributed over the outer circumference thereof a plurality of first radial projections (1b, 1b') which protrude from the base body (1a), are bent back radially inwardly so that they extend parallel with a plane of the base body (1a) and are in each case arranged with a finite spacing (A) with respect to the base body (1a);
in which the sealing ring (3) is secured concentrically to the base body (1a); and
in which the filter component (4) has a pocket or bag form with an opening (4a) and is retained in a clamping manner with an edge region of the opening (4a) between the base body (1a) and the bent-back first radial projections (1b, 1b').

2. Filter arrangement (2) according to claim 1, in which the first radial projections (1b, 1b') can be bent back and forth outwards and inwards in a reversible manner.

3. Filter arrangement (2) according to any one of the preceding claims, in which at least some of the first radial projections (1b') have a number of first retention projections (1e'), preferably retention tips (1e'), for the filter component (4) at the outer sides thereof facing away from the base body (1a).

4. Filter arrangement (2) according to any one of the preceding claims, in which the clamping ring (1' , 1") has a number of second retention projections (1d'), preferably retention tips (1d'), for the filter component (4) in a state distributed over an inner circumference of the base body (1a).

5. Filter arrangement (2) according to claim 3 and claim 4, in which the second retention projections (1d') are arranged in circumferential regions which correspond to those circumferential regions in which the first radial projections (1b') are also formed.

6. Filter arrangement (2) according to any one of the preceding claims, in which the clamping ring (1") has, in a state distributed over the outer circumference of the base body (1a), a plurality of second radial projections (1h) which protrude from the base body (1a) and of which at least some are bent approximately at right-angles with respect to the mentioned plane, in particular with respect to the same side as the first radial projections (1b').

7. Filter arrangement (2) according to any one of the preceding claims, in which the sealing ring (3) is arranged at a side of the base body (1a) facing away from the bent-back first radial projections (1b') or, in particular with reference back to claim 6, at the same side of the base body (1a) as the bent-back first radial projections (1b').

8. Filter arrangement (2) according to any one of the preceding claims, in which the sealing ring (3) has, with respect to the clamping ring (1'), preferably with the exception of the non-bent second radial projections (1h) according to claim 6, an excess dimension in a radial direction, preferably completely circumferentially.

9. Air supply device (5), in particular for living spaces, having a filter arrangement (2) according to any one of the preceding claims and having at least one tubular air guiding element (7) in which the filter arrangement (2) is removably inserted, wherein the filter arrangement (2) is preferably arranged at least partially in the air guiding element (7).

10. Air supply device (5) according to claim 9 having a terminal extraction hood (6) which is connected to the air guiding element (7) for guiding fluid, wherein the filter arrangement (2) is preferably at least partially arranged in the extraction hood (6).

11. Air supply device (5) according to claim 10, in which the extraction hood (6) has an opening (10) having a removable cover (8) which closes the opening (10) and through which the filter arrangement (2) can be removed and inserted.

12. Air supply device (5) according to any one of claims 9 to 11, in which the filter arrangement (2) is or can be secured in the air supply device (5) by the air supply device (5) having in the region of the air guiding element (7) or, with reference at least to claim 10, in the region of the extraction hood (6) a number of inwardly directed support projections, in particular a continuously circumferential support projection (11), for example, in the form of a bead (11) or a flanged edge on which the filter arrangement (2) rests in an edge region of the base body (1a).

13. Air supply device (5) according to any one of claims 9 to 11, in which the filter arrangement (2) is or can be secured in the air supply device (5) by the air supply device (5) having in the region of the air guiding element (7) or, with reference at least to claim 10, in the region of the extraction hood (6) a support face (7a), in particular a front support face (7a), and the filter arrangement (2) with reference back to claim 6, resting with the non-bent second radial projections (1h) on the mentioned support face (7a).

14. Air supply device (5) according to any one of claims 9 to 13, in which the filter arrangement (2) is centered by the sealing ring (3) and/or, with reference back to claim 6, by the bent, second radial projections (1h) in the air supply device (5).

15. Method for producing a filter arrangement (2), in particular the filter arrangement (2) according to any one of claims 1 to 8, having the steps of:
a) providing a clamping ring (1, 1', 1") made of a sheet metal material which has a base body (1a) and in a state distributed over the outer circumference thereof a plurality of first radial projections (1b, 1b') which protrude from the base body (1a);
b) providing a sealing ring (3); and
c) providing a pocket-like or bag-like filter component (4) made of a filter material having an opening (4a);
d) arranging the filter component (4) on the clamping ring (1, 1', 1") so that an edge of the opening (4a) bears completely circumferentially on the base body (1a) in a planar manner;
e) bending back the first radial projections (1b, 1b') radially inwardly at that side of the clamping ring (1, 1', 1"), on which the filter component (4) bears so that they extend parallel with a plane of the base body (1a) and in each case retain a portion of the edge of the opening (4a) of the filter component (4) in a clamping manner against the base body (1a);
f) concentrically fitting the sealing ring (3) to the base body (1a).

## Revendications

1. Agencement filtrant (2) pour un appareil d'alimentation en air (5), présentant :
une bague de serrage (1, 1', 1") en un matériau de tôle ;
une bague d'étanchéité (2) ; et
un élément filtrant (4) en un matériau filtrant ;
dans lequel la bague de serrage (1, 1', 1") présente un corps de base (1a) et une pluralité de premières saillies radiales (1b, 1b') réparties sur sa circonférence extérieure, qui font saillie à partir du corps de base (1a), sont recourbées radialement vers l'intérieur de sorte qu'elle s'étendent parallèlement à un plan du corps de base (1a) et sont disposées respectivement à une distance finie (A) du corps de base (1a) ;
dans lequel la bague d'étanchéité (3) est fixée de manière concentrique au corps de base (1a) ; et
dans lequel l'élément filtrant (4) présente une forme de poche ou de sac avec une ouverture (4a) et est maintenu par serrage avec une zone de bord de l'ouverture (4a) entre le corps de base (1a) et les premières saillies radiales (1b, 1b') recourbées.

2. Agencement filtrant (2) selon la revendication 1, dans lequel les premières saillies radiales (1b, 1b') peuvent être repliées de manière réversible vers l'extérieur et vers l'intérieur.

3. Agencement filtrant (2) selon l'une quelconque des revendications précédentes, dans lequel au moins certaines des premières saillies radiales (1b') présentent, sur leurs côtés extérieurs opposés au corps de base (1a), un certain nombre de premières saillies de maintien (1e'), de préférence des pointes de maintien (1e'), pour l'élément filtrant (4).

4. Agencement filtrant (2) selon l'une quelconque des revendications précédentes, dans lequel la bague de serrage (1', 1") présente un certain nombre de deuxièmes saillies de maintien (1d'), de préférence des pointes de maintien (1d'), réparties sur une circonférence intérieure du corps de base (1a), pour l'élément filtrant (4).

5. Agencement filtrant (2) selon la revendication 3 et la revendication 4, dans lequel les secondes saillies de maintien (1d') sont disposées dans des zones circonférentielles qui correspondent aux zones circonférentielles dans lesquelles les premières saillies radiales (1b') sont également formées.

6. Agencement filtrant (2) selon l'une quelconque des revendications précédentes, dans lequel la bague de serrage (1") présente une pluralité de secondes saillies radiales (1h) réparties sur la circonférence extérieure du corps de base (1a), qui font saillie à partir du corps de base (1a) et dont au moins certaines sont coudées à peu près perpendiculairement par rapport au plan mentionné, en particulier du même côté que les premières saillies radiales (1b').

7. Agencement filtrant (2) selon l'une quelconque des revendications précédentes, dans lequel la bague d'étanchéité (3) est disposée sur un côté du corps de base (1a) opposé aux premières saillies radiales repliées (1b') ou, en particulier en référence à la revendication 6, du même côté du corps de base (1a) que les premières saillies radiales repliées (1b').

8. Agencement filtrant (2) selon l'une quelconque des revendications précédentes, dans lequel la bague d'étanchéité (3) présente, par rapport à la bague de serrage (1'), de préférence à l'exception des secondes saillies radiales non coudées (1h) selon la revendication 6, un surdimensionnement en direction radiale, de préférence sur toute sa circonférence.

9. Appareil d'alimentation en air (5), en particulier pour des pièces d'habitation, avec un agencement filtrant (2) selon l'une quelconque des revendications précédentes et avec au moins un élément de guidage d'air tubulaire (7) dans lequel l'agencement filtrant (2) est inséré de manière amovible, dans lequel l'agencement filtrant (2) est de préférence disposé au moins partiellement dans l'élément de guidage d'air (7).

10. Appareil d'alimentation en air (5) selon la revendication 9, avec une hotte d'aspiration terminale (6) qui est connectée à l'élément de guidage d'air (7) de manière conduisant du fluide, dans lequel l'agencement filtrant (2) est de préférence disposé au moins partiellement dans la hotte d'aspiration (6).

11. Appareil d'alimentation en air (5) selon la revendication 10, dans lequel la hotte d'aspiration (6) présente une ouverture (10) avec un couvercle amovible (8) fermant l'ouverture (10), à travers laquelle l'agencement filtrant (2) peut être retiré et inséré.

12. Appareil d'alimentation en air (5) selon l'une quelconque des revendications 9 à 11, dans lequel l'agencement filtrant (2) est fixé ou peut être fixé dans l'appareil d'alimentation en air (5) en ce que l'appareil d'alimentation en air (5) présente, au niveau de l'élément de guidage d'air (7) ou, en référence à au moins la revendication 10, au niveau du capot d'aspiration (6), un certain nombre de saillies d'appui dirigées vers l'intérieur, en particulier une saillie d'appui (11) s'étendant sur toute la circonférence, par ex. sous forme d'une nervure (11) ou d'un bord rabattu, sur laquelle/lesquelles l'agencement filtrant (2) repose dans une zone de bord du corps de base (1a).

13. Appareil d'alimentation en air (5) selon l'une quelconque des revendications 9 à 11, dans lequel l'agencement filtrant (2) est fixé ou peut être fixé dans l'appareil d'alimentation en air (5) en ce que l'appareil d'alimentation en air (5) présente, au niveau de l'élément de guidage d'air (7) ou, en référence à au moins la revendication 10, au niveau du capot d'aspiration (6), une surface d'appui (7a), en particulier une surface d'appui frontale (7a), et l'agencement filtrant (2), en référence à la revendication 6, repose sur ladite surface d'appui (7a) avec les secondes saillies radiales non coudées (1h).

14. Appareil d'alimentation en air (5) selon l'une quelconque des revendications 9 à 13, dans lequel l'agencement filtrant (2) est centré dans l'appareil d'alimentation en air (5) par la bague d'étanchéité (3) et/ou, en référence à la revendication 6, par les secondes saillies radiales coudées (1h).

15. Procédé de fabrication d'un agencement filtrant (2), en particulier de l'agencement filtrant (2) selon l'une quelconque des revendications 1 à 8, avec les étapes de :
a) fourniture d'une bague de serrage (1, 1', 1") en matériau tôle, qui présente un corps de base (1a) et une pluralité de premières saillies radiales (1b, 1b') réparties sur son pourtour extérieur qui dépassent du corps de base (1a) ;
b) fourniture d'une bague d'étanchéité (3) ; et
c) fourniture d'une partie filtrante (4) en forme de poche ou de sac en un matériau filtrant avec une ouverture (4a) ;
d) agencement de l'élément filtrant (4) sur la bague de serrage (1, 1', 1") de sorte qu'un bord de l'ouverture (4a) repose à plat sur toute sa circonférence sur le corps de base (1a) ;
e) repli des premières saillies radiales (1b, 1b') radialement vers l'intérieur, du côté de la bague de serrage (1, 1', 1") sur lequel l'élément filtrant (4) repose, de manière à ce qu'elles s'étendent parallèlement à un plan du corps de base (1a) et maintiennent respectivement une section du bord de l'ouverture (4a) de l'élément filtrant (4) par serrage contre le corps de base (1a) ;
f) application concentrique de la bague d'étanchéité (3) sur le corps de base (1a).
